# EUROPEAN PATENT APPLICATION

(11) **EP 3 466 551 A1**
(43) Date of publication of application: **10.04.2019**
(21) Application number: 17810079.8
(22) Date of filing: 19.05.2017
(51) Int. Cl.: B07B 4/02, B03C 1/00, B03C 1/14, B24C 9/00

(54) **SEPARATOR APPARATUS AND SHOT PROCESSING APPARATUS**

(30) Priority: 06.06.2016 JP 2016112975
(71) Applicant: Sintokogio, Ltd., Nagoya-shi, Aichi 450-6424 (JP)
(72) Inventor: SUGIURA Takeshi, Toyokawa-shi Aichi 441-1205 (JP); IBI Yusuke, Toyokawa-shi Aichi 441-1205 (JP)
(74) Representative: Müller-Boré & Partner Patentanwälte PartG mbB
(86) International application number: PCT/JP2017/018806
(87) International publication number: WO 2017/212898

(57) **Abstract**

Disclosed is a separator device comprising a suction device to suck in air, and a wind-force sorting mechanism for sorting a mixture to separate projection materials from the mixture, wherein the wind-force sorting mechanism comprises: an airflow passage which extends horizontally from an inlet to an outlet thereof and in which an airflow is generated by suction force of the suction device; a mixture supply port formed on an upper side of a midstream region of the airflow passage; and a sorting section configured to allow a mixture containing projection materials and powdery/granular foreign substances to freely fall from the mixture supply port into the airflow passage to thereby cause the airflow to hit against the mixture so as to sort the mixture into a first group which move beyond a given reference height position, and a second group which fall without moving beyond the reference height position.

## Description

### TECHNICAL FIELD

The present invention relates to a separator device and a shot processing apparatus.

### BACKGROUND ART

The following Patent Document 1 discloses a separator device for sorting a particle by means of airflow. This separator device has a separator body formed with an airflow inlet, a coarse particle outlet, a fine particle outlet, and an airflow outlet. The airflow inlet is composed of an upper opening of the separator body, and a raw material supply port is disposed within the airflow inlet.

### CITATION LIST

### [Patent Document]

Patent Document 1: JP S48-15162A

### SUMMARY OF INVENTION

### [Technical Problem]

However, in the separator device disclosed in the Patent Document 1, if a wind velocity distribution has a large variation in a flow passage cross-section taken along a plane orthogonal to a flow direction of airflow in the separator body, it exerts a bad influence on efficiency in sorting a mixture (mixture sorting efficiency).

The present invention has been made to solve the above conventional problem, and an object thereof is to obtain a separator device and a shot processing apparatus which are capable of improving mixture sorting efficiency.

### [Solution to Technical Problem]

In order to achieve the above object, the present invention provides a separator device for sorting a mixture containing projection materials and powdery/granular foreign substances to separate the projection materials from the mixture. The separator device comprises a suction device to suck in air, and a wind-force sorting mechanism for sorting the mixture to separate the projection materials from the mixture, by means of wind force, wherein the wind-force sorting mechanism comprises: an airflow passage which extends horizontally from an inlet to an outlet thereof and in which an airflow is generated by suction force of the suction device provided on the side of the outlet; a mixture supply port formed on an upper side of a midstream region of the airflow passage; and a sorting section configured to allow the mixture containing projection materials and powdery/granular foreign substances to freely fall from the mixture supply port into the airflow passage to thereby cause the airflow to hit against the mixture so as to sort the mixture into a first group of pieces which move beyond a given reference height position while being entrained in the airflow, and a second group of pieces which fall without moving beyond the reference height position, and wherein the airflow passage comprises a wind velocity stabilization section formed upstream of the mixture supply port, and configured to have a tube shape in which an area of an airflow passage cross-section taken along a plane orthogonal to a flow direction of the airflow is constant, thereby straightening the airflow and uniforming a velocity distribution of wind supplied toward a downstream side of the airflow passage, in the airflow passage cross-section.

In the separator device of the present invention having the above feature, an airflow is generated in an airflow passage extending horizontally from an inlet to outlet outlet thereof by suction force of a suction device provided on the side of the outlet. Then, in the sorting section, a mixture containing projection materials and powdery/granular foreign substances is enabled to fall from a mixture supply port formed on an upper side of a midstream region of the airflow passage, into the airflow passage to thereby cause the airflow to hit against the mixture so as to sort the mixture into a first group of pieces which move beyond a given reference height position while being entrained in the airflow, and a second group of pieces which fall without moving beyond the reference height position. Here, in a wind velocity stabilization section of the airflow passage, the airflow is straightened, a velocity distribution of wind supplied toward a downstream side of the airflow passage is uniformed in the airflow passage cross-section. In this way, mixture sorting efficiency in the sorting section is improved. As used in this specification, the term "projection materials" means materials to be projected from the projector toward a target object to be processed. More specifically, for example, crushed projection materials, and projection materials worn over an allowable wear volume (i.e., projection materials which have become unsuitable to be reused as projection materials) are not encompassed in in the term "projection materials". Rather, the crushed projection materials, and the projection materials worn over an allowable wear volume, are included in an example of the "powdery/granular foreign substances".

Preferably, in the separator device of the present invention, the sorting section has a narrowed area formed to narrow a lower region of the airflow passage upwardly to reduce the area of the airflow passage cross-section taken along the plane orthogonal to the flow direction of the airflow to become less than that in the wind velocity stabilization section.

According to this feature, the sorting section has a narrowed area formed to narrow a lower region of the airflow passage upwardly to reduce the area of the airflow passage cross-section taken along the plane orthogonal to the flow direction of the airflow to become less than that in the wind velocity stabilization section. This makes it possible to increase the wind velocity of the airflow in the airflow passage and thus effectively sort the mixture in the airflow passage.

Preferably, in the above separator device, the sorting section has an inclined portion formed to be inclined upwardly toward an upstream side of the airflow passage, wherein the narrowed area is composed of an end of the inclined portion on the upstream side of the airflow passage.

According to this feature, the sorting section has an inclined portion formed to be inclined upwardly toward an upstream side of the airflow passage, wherein the narrowed area is composed of an end of the inclined portion on the upstream side of the airflow passage. This makes it possible to stably increase the wind velocity of the airflow in the airflow passage, and enable a part of the mixture which moves beyond the narrowed area, to flow along the inclined portion.

Preferably, the separator device of the present invention further comprises: a discharge section located on an upward side of the mixture supply port and composed of a pair of vertical walls opposed to each other in spaced-apart relation; a receiving section composed of a pair of inclined walls extending, respectively, from upper ends of the pair of vertical walls in opposite directions away from each other with an upward inclination, wherein the mixture is fed onto the inclined walls; and a vertical wall-like gate disposed in spaced-apart relation to upper surfaces of respective one ends of the inclined walls on the side of the vertical walls.

According to this feature, the discharge section located on an upward side of the mixture supply port is composed of a pair of vertical walls opposed to each other in spaced-apart relation, and the receiving section provided on the side of upper end of the pair of vertical walls are composed of a pair of inclined walls extending, respectively, from the upper ends of the pair of vertical walls in opposite directions away from each other with an upward inclination. Further, the vertical wall-like gate is disposed in spaced-apart relation to upper surfaces of respective one ends of the inclined walls on the side of the vertical walls. Here, the mixture is fed onto the inclined walls of the receiving section. Thus, the mixture flows from between a lower end of the gate and the inclined walls into the discharger section, so that an amount of the mixture to be fed to the discharge section is restricted by the gate. As a result, a constant amount of the mixture is fed to the mixture supply port via the discharge section. This makes it possible to stabilize mixture sorting efficiency in the sorting section.

Preferably, the separator device of the present invention further comprises: a magnetic-force sorting mechanism provided on an upward side of the mixture supply port of the wind-force sorting mechanism and configured to sort the mixture to separate magnetic projection materials from the mixture, by means of magnetic force. The magnetic-force sorting mechanism comprises: a rotary drum formed in a circular hollow cylindrical shape and configured to be rotationally driven in one direction about an axis thereof; a mixture feeding device to feed the mixture to one lateral zone of the rotary drum; a magnet fixedly disposed inside the rotary drum at least in a region corresponding to a range extending from the one lateral zone to a lower end position of the rotary drum; and a guide portion disposed in opposed and spaced-apart relation to the one lateral zone of the rotary drum, whereby the magnetic-force sorting mechanism is operable to prevent a part of the mixture falling from between the guide portion and the rotary drum before reaching the lower end position of the rotary drum, from being fed to the mixture supply port, and feed, to the mixture supply port, the remaining mixture attracted by magnetic force of the magnet so as to contain the projection materials at an increased rate.

According to this feature, the magnetic-force sorting mechanism is provided on the upward side of the mixture supply port of the wind-force sorting mechanism. In the magnetic-force sorting mechanism, the rotary drum is formed in a circular hollow cylindrical shape and configured to be rotationally driven in one direction about an axis thereof. Further, by the mixture feeding device, the mixture containing magnetic projection materials and powdery/granular foreign substances is fed to one lateral zone of the rotary drum. The magnet is fixedly disposed inside the rotary drum at least in a region corresponding to a range extending from the one lateral zone to a lower end position of the rotary drum, so that the magnetic projection materials are attracted toward the rotary drum by magnetic force of the magnet, and conveyed to the lower end position of the rotary drum at minimum. The guide portion is disposed in opposed and spaced-apart relation to the one lateral zone of the rotary drum, so that it is possible to prevent scattering of the mixture containing the projection materials, and allow non-magnetic foreign substances incapable of being attracted by the magnet, to fall along the guide portion basically by gravity. The magnetic-force sorting mechanism is configured to prevent a part of the mixture falling from between the guide portion and the rotary drum before reaching the lower end position of the rotary drum, i.e., a mixture containing the foreign substances at an increased rate, from being fed to the mixture supply port, and feed, to the mixture supply port, the remaining mixture attracted by magnetic force of the magnet so as to contain the projection materials at an increased rate. Thus, the mixture having a low rate of foreign substances is supplied to the sorting section. This makes it possible to reduce the load on the wind-force sorting mechanism.

The present invention further provides a shot processing apparatus comprising: a projector for projecting projection materials to a target object to be processed; and the above separator device, wherein the separator device is provided in a recovery path for recovering the projection materials projected by the projector.

In the shot processing apparatus of the present invention, the projector projects projection materials to a target object to be processed. The separator device is provided in a recovery path for recovering the projection materials projected by the projector. This sorting section of the wind-force sorting mechanism allows the mixture containing projection materials and powdery/granular foreign substances to freely fall from the mixture supply port into the airflow passage to thereby cause the airflow to hit against the mixture so as to sort the mixture into a first group of pieces which move beyond a given reference height position while being entrained in the airflow, and a second group of pieces which fall without moving beyond the reference height position. Further, in the wind-force sorting mechanism, the wind velocity stabilization section forming an upstream region of the airflow passage located upstream of the mixture supply port is configured to have a tube shape in which an area of an airflow passage cross-section taken along a plane orthogonal to a flow direction of the airflow is constant, thereby straightening the airflow and uniforming a velocity distribution of wind supplied toward the downstream side of the airflow passage, in the airflow passage cross-section. Thus, the mixture sorting efficiency in the wind-force sorting mechanism is improved.

### [Effect of Invention]

The separator device and the shot processing apparatus of the present invention are capable of improving the mixture sorting efficiency.

### BRIEF DESCRIPTION OF DRAWINGS

FIG. 1 is a schematic diagram depicting a configuration of a shot processing apparatus equipped with a separator device according to one embodiment of the present invention.
FIG. 2 is a sectional view depicting the separator device in FIG. 1.
FIG. 3 is a perspective view depicting a wind-force sorting mechanism of the separator device in FIG. 1.

### DESCRIPTION OF EMBODIMENTS

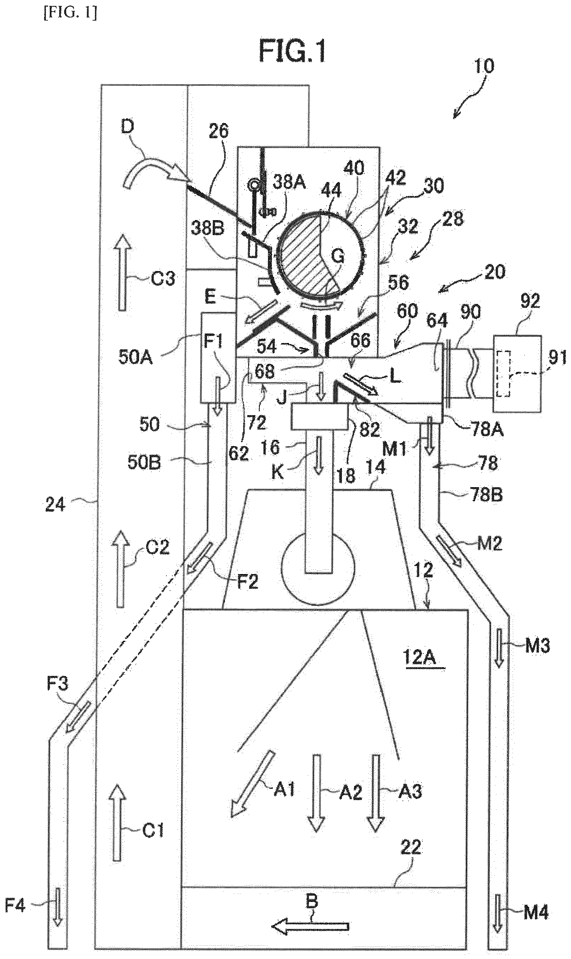

With reference to FIGS. 1 to 3, a separator device and a shot processing apparatus according to one embodiment of the invention will now be described.

First of all, the shot processing apparatus will be described based on FIG. 1. A target object to be processed by the shot processing apparatus according to this embodiment is, for example, a product in a state in which it has just been cast using a sand mold and casting sand adheres to a surface thereof.

As depicted in FIG. 1, the shot processing apparatus 10 comprises a cabinet 12. The cabinet 12 is internally formed with a projection chamber 12A in which a target object is subjected to blast processing (in the general meaning, shot processing or surface processing) by projecting projection materials (shots) to the target object. As one example, the projection chamber 12A is internally provided with a product mounting table (depiction is omitted) for allowing the target object to be placed thereon. The cabinet 12 has a ceiling to which a projector 14 is attached. In this embodiment, the projector 14 is composed of a centrifugal projector which is configured to impose a centrifugal force to projection materials (shots) according to rotation of an impeller. More specifically, the projector 14 is configured to centrifugally accelerate projection materials and project the accelerated projection materials to a target object disposed within the projection chamber 12A. In this embodiment, as such projection materials, magnetic projection materials (ferrous projection materials (e.g., steel balls) are suitably used. Thus, by projecting the projection materials from the projector 14 to a target object, foreign substances (casting sand, burr, scale, etc.) adhering to a surface of the target object can be cleaned.

An introduction pipe 16 is disposed on an upward side of the projector 14, and an upper end of the introduction pipe 16 is connected to a shot tank 18 for storing projection materials. The projector 14 is also coupled to a circulation device 20 through the introduction pipe 16 and the shot tank 18. The circulation device 20 is a device for conveying projection materials projected by the projector 14 to circulate the projection materials to the projector 14. That is, the shot processing apparatus 10 is equipped with the circulation device 20 to collect projected projection materials and foreign substances removed from a target object and recycle the projection materials.

The circulation device 20 comprises a screw conveyer 22 disposed in a lower region of the cabinet 12 to extend horizontally. The screw conveyer 22 is configured to receive projection materials falling (see the arrowed lines A1, A2, A3) after being projected from the projector 14, and powdery/granular foreign substances, and convey them in a given conveyance direction (direction indicated by the arrowed line B). It is to be understood that an oscillating conveyer may be used in place of the screw conveyer 22 as a conveyance device. Further, the screw conveyer 22 may be a rotary screen-equipped screw conveyer.

A bucket elevator 24 extending in an upward-downward direction is disposed such that a lower end thereof is couples to one end of the screw conveyer 22 on a downstream side in the conveyance direction (on the left side in FIG. 1). The bucket elevator 24 is configured such that an endless belt (depiction is omitted) is wound around and between two pulleys (depiction is omitted) disposed, respectively, at a top and a bottom of the shot processing apparatus 10, and a large number of buckets (depiction is omitted) are attached to the endless belt. Then, the bucket elevator 24 is operable, according to rotational drive of the pulleys, to scoop up projection materials and others collected by the screw conveyer 22 by the buckets, convey the scooped projection materials and others upwardly (see the arrowed lines C1, C2, C3).

The bucket elevator 24 has an upper portion communicating with a separator device 28 via a playground slide-like chute 26. That is, the separator device 28 is provided in a recovery path for recovering projection materials projected by the projector 14. The bucket elevator 24 is configured to feed the projection materials and others from the upper portion thereof to the chute 26 (see the arrowed line D), and the chute 26 is configured to feed the projection materials and others to the separator device 28. While the upper portion of the bucket elevator 24 may communicate with the separator device 28 via the chute 26, as depicted in FIG. 1, it is to be understood that a conveyance device (e.g., a crew conveyer, or a rotary screen-equipped screw conveyer) may be provided between the upper portion of the bucket elevator 24 and the separator device 28.

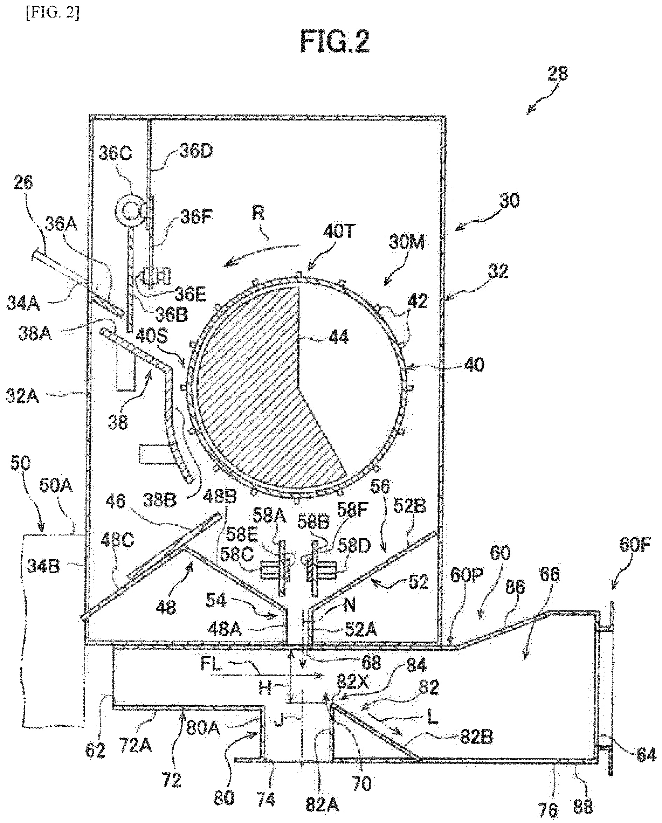

FIG. 2 is a vertical sectional view of the separator device 28. In this embodiment, the separator device 28 is constructed, for example, as a device capable of efficiently separating a large amount of sand and projection materials with less energy from each other. As depicted in FIG. 2, the separator device 28 comprises a magnetic-force sorting mechanism 30 provided in an upper region thereof, and a wind-force sorting mechanism 60 provided on a downward side of the magnetic-force sorting mechanism 30.

The magnetic-force sorting mechanism 30 is a mechanism for separating magnetic (ferrous) projection materials and non-magnetic (non-ferrous) casting sand from each other by means of magnetic force of a magnet 44, i.e. a mechanism advantageous to sorting a mixture containing projection materials and a large amount of casting sand. On the other hand, the wind-force sorting mechanism 60 is a mechanism for separating reusable projection materials and foreign substances which have failed to be separated by the magnetic-force sorting mechanism 30, from each other by means of wind force, i.e. a mechanism advantageous to sorting a mixture containing projection materials and a small amount of casting sand, iron powder and the like. Examples of the foreign substances which have failed to be separated by the magnetic-force sorting mechanism 30 include: casting sand remaining in a small amount as compared to the reusable projection materials; iron powder (in the general meaning, powdery substance) such as scale or burr removed from a target object; and crushed projection materials and projection materials worn over an allowable wear volume (i.e., used projection materials which have become unsuitable to be reused as projection materials).

Further, the separator device 28 equipped with the magnetic-force sorting mechanism 30 and the wind-force sorting mechanism 60 is configured to send the projection materials suitable for reuse, to a path leading to the projector 14. The magnetic-force sorting mechanism 30 and the wind-force sorting mechanism 60 will be described in detail below. In the following description, a direction perpendicular to the drawing sheet of FIG. 2 will be referred to as "separator-width direction".

The magnetic-force sorting mechanism 30 comprises a housing 32 internally defining a space. This housing 32 is disposed on an upward side of an aftermentioned mixture supply port 68 of the wind-force sorting mechanism 60. In an upper portion of a left (in FIG. 2) lateral wall 32A of the housing 32, a feeding opening 34A is penetratingly formed. A lower end of the aforementioned chute 26 is disposed at a lower edge of the feeding opening 34A. An inclined plate 36A is provided below and adjacent to the lower end of the chute 26. The inclined plate 36A is inclined downwardly toward the inside of the housing 32.

An adjustment gate 36B is disposed rightward (in FIG. 2) of a lower end of the inclined plate 36A. The adjustment gate 36B is a plate-shaped member which is long in the separator-width direction (direction perpendicular to the drawing sheet of FIG. 2), and provided so as to uniformly spread the projection material-containing mixture in the separator-width direction. The adjustment gate 36B has an upper end supported by the housing 32 through a ring 36C and a vertical wall-like bracket 36D, and a lower end formed as a free end swingable in a rightward-leftward (lateral) direction in FIG. 2. Further, a stopper 36E is disposed on the right (in FIG. 2) side of the adjustment gate 36B to restrict an amount of swinging movement of the adjustment gate 36B. The stopper 36E is fixed to a lower end of the bracket 36D through a vertical wall-like intercalated plate 36F. The stopper 36E comprises a screw mechanism capable of adjusting an amount of protrusion of a screw toward the adjustment gate 36B.

A feeding inclined portion 38A of a guide plate 38 is disposed just below and spaced-apart relation to the inclined plate 36A and the adjustment gate 36B. The feeding inclined portion 38A serving as a mixture feeding device is disposed to overlap approximately a right (in FIG. 2) half of the inclined plate 36A in top plan view (as viewed from above the apparatus), and inclined downwardly toward the inside the inside of the housing 32 (in the rightward direction in FIG. 2). Further, a gap is set between the lower end of the adjustment gate 36B, and an intermediate area of the feeding inclined portion 38A in a direction of the downward inclination. A main unit 30M (magnet separator) of the magnetic-force sorting mechanism 30 is disposed inside the housing 32 at a position on the side of a central region of the housing 32 with respect to the guide plate 32.

The main unit 30M comprises a circular hollow cylindrical-shaped rotary drum 40 disposed such that an axial direction thereof extends in the separator-width direction (direction perpendicular to the drawing sheet of FIG. 2). The rotary drum 40 is coupled to a rotary shaft of an electric motor (drive motor, depiction is omitted) through a driving force transmission mechanism (depiction is omitted). That is, the rotary drum 40 is configured to be rotationally driven in one direction (see the direction indicated by the arrowed line R) about a rotary shaft thereof, according to rotation of the electric motor. A rotational center (rotary shaft) of the rotary drum 40 is disposed just above the after-mentioned mixture supply port 68 of the wind-force sorting mechanism 60.

The feeding inclined portion 38A of the guide plate 38 is configured to feed the mixture to one lateral zone 40S of the rotary drum 40 to which a portion of the rotary drum 40 currently located in a top position 40T thereof is moved next when the rotary drum 40 is being rotationally driven, from an obliquely upward side with respect to the one lateral zone 40S. The guide plate 38 further has a guide portion 38B bent downwardly from a lower end of the feeding inclined portion 38A. The guide portion 38B is disposed in opposed and spaced-apart relation to the one lateral zone 40S of the rotary drum 40, and has a function of uniformly pushing the projection material-containing onto the rotary drum 40, while preventing scattering of the mixture.

The rotary drum 40 has an outer surface onto which a plurality of (in this example, total sixteen) square bar-shaped reeds (blades) 42 each extending in a direction of the rotary shaft of the rotary drum 40 are attached. These reeds 42 are arranged at even intervals in a circumferential direction of the rotary drum 40 , and functions so as to deliver the projection material-containing mixture fed to the rotary drum 40.

The aforementioned magnet 44 fixedly disposed inside the rotary drums 40. The magnet 44 is a permanent magnet which is disposed over a range extending from a position corresponding to an upper end position (top position 40T) of the rotary drum 40, in a counterclockwise direction (in FIG. 2) along an inner periphery of the rotary drum 40 by a given angle (a range corresponding to a sum of a left (in FIG. 2) half and a lower region of a right (in FIG. 2) half of the rotary drum 40). That is, the magnet 44 is installed in a region of the rotary drum 40 including a region corresponding to a range extending from the one lateral zone 40S to the lower end position of the rotary drum 40.

A sorting inclined plate 46 is disposed below the left (in FIG. 2) side of the rotary drum 40. The inclined plate 46 is inclined downwardly toward the outside of the housing 32 (left side in FIG. 2), wherein an intermediate portion between an upper end and a lower end thereof is located just below a lower end of the guide portion 38B. The inclined plate 46 is fixed to an inclined portion 48C of a bent partition plate 48 in a surface contact state, so that it is fixed to the housing 32 through the bent partition plate 48. The inclined portion 48C of the bent partition plate 48 is inclined in the same direction as that of the inclined plate 46.

Further, a non-magnetic substance discharge port 34B is penetratingly formed in a lower portion of the left (in FIG. 2) lateral wall 32A of the housing 32, and a lower end of the inclined portion 48C is disposed above and adjacent to a lower edge of the non-magnetic substance discharge port 34B. The inside of the housing 32 communicates with a non-magnetic substance discharge passage 50 via the non-magnetic substance discharge port 34B. As depicted in FIG. 1, the non-magnetic substance discharge passage 50 is composed of a pipe connection 50A connected to the housing 32, and a discharge pipe 50B connected to the pipe connection 50A. As one example, a distal end (lower end) of the discharge pipe 50B is disposed above or inside a recovery hopper (depiction is omitted). Based on the above structure, the magnetic-force sorting mechanism 30 depicted in FIG. 2 is operable to prevent a part of the mixture (a mixture mainly containing non-magnetic substances) falling from between the guide portion 38B and the rotary drum 40 before reaching the lower end position of the rotary drum 40, from being fed to the mixture supply port 68.

Further, in a lower region of the inside of the housing 32, a discharge section 54 is formed directly on (on the upward side of) the aftermentioned mixture supply port 68 of the wind-force sorting mechanism 60 in adjacent relation to the aftermentioned mixture supply port 68. The discharge section 54 is composed of a pair of vertical walls 48A, 52A opposed to each other in spaced-apart relation. A first one 48A of the vertical walls is part of the aforementioned the bent partition plate 48, and the other, second, vertical wall 52A is part of a right (in FIG. 2) bent partition plate 52. Further, in the lower region of the inside of the housing 32, a pair of inclined walls 48B, 52B extending, respectively, from upper ends of the pair of vertical walls 48A, 52A in opposite directions away from each other with an upward inclination is formed, and a receiving section 56 is composed of the pair of inclined walls 48B, 52B. The receiving section 56 is configured such that the mixture is fed onto the inclined walls 48B, 52B. The first inclined wall 48B forms part of the bent partition plate 48, and connects the vertical wall 48A and the inclined portion 48C together. The second inclined wall 52B forms part of the bent partition plate 52.

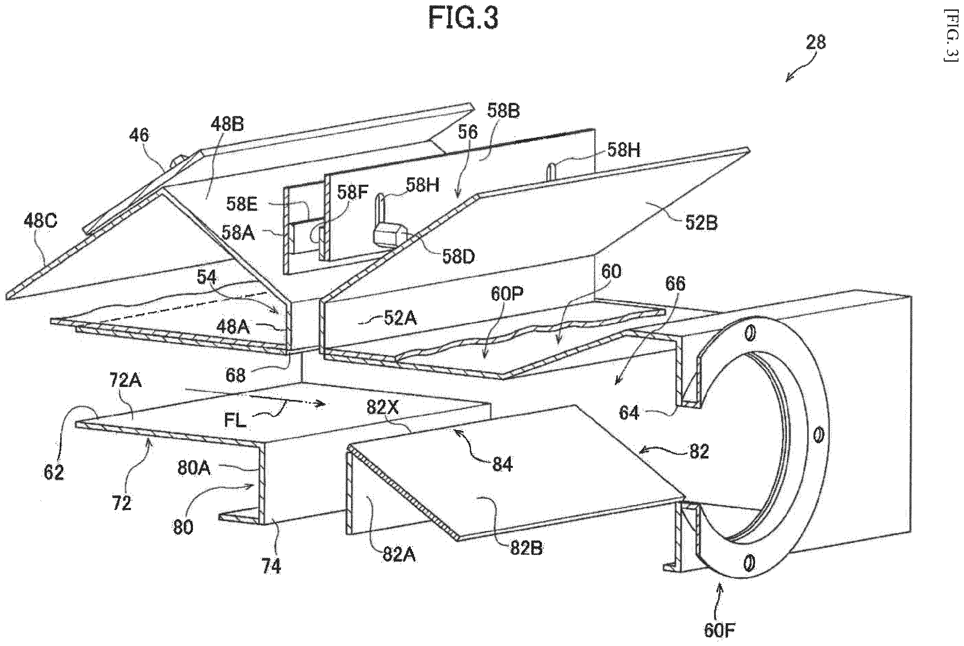

Further, in the lower region of the inside of the housing 32, two vertical wall-like gates 58A, 58A are disposed in spaced-apart relation to upper surfaces of respective one ends of the inclined walls 48B, 52B on the side of the vertical walls 48A, 52A. The gates 58A, 58A are provided so as to adjust an amount of the mixture separated by the magnetic-force sorting mechanism 30 and mainly containing ferrous projection materials, to be put into the wind-force sorting mechanism 60. As depicted in FIG. 3, each of the gates 58A, 58B is penetratingly formed with an elongate hole 58H having a longitudinal direction extending in the upward-downward direction. The gates 58A, 58B are fixed, respectively, to stationary plates 58E, 58F by screw members 58C, 58D (see FIG. 2) each penetrating a corresponding one of the elongate holes 58H (depiction of the elongate hole of the gate 58A is omitted). The stationary plates 58E, 58F are fixed to the housing 32, although detailed depiction is omitted. Based on the above structure, a height position of each of the gates 58A, 58B can be adjusted by changing a relative position of each of the elongate holes 58H with respect to a corresponding one of the screw members 58C, 58D (see FIG. 2). It should be noted that, in FIG. 1, depiction of the stationary plates 58E, 58F and the screw members 58C, 58D is omitted.

As described above, the magnetic-force sorting mechanism 30 depicted in FIG. 2 is operable to feed the mixture attracted by magnetic force of the magnet 44 so as to contain the projection materials at an increased rate, to the mixture supply port 68 via the receiving section 56 and the discharge section 54.

The wind-force sorting mechanism 60 is composed of an approximately tube-shaped panel member 60P in which a sectional shape depicted in FIG. 2 basically extends in a direction perpendicular to the drawing sheet of FIG. 2, and a lateral wall is provided on each of front and back sides of the drawing sheet, except for a duct connecting region 60F on a right (in FIG. 2) end thereof. A top surface of the panel member 60P of the wind-force sorting mechanism 60 includes a region on which a bottom surface of the housing 32 of the magnetic-force sorting mechanism 30 is superimposed. The wind-force sorting mechanism 60 is internally formed with an airflow passage 66 extending horizontally from an inlet 62 to an outlet 64 thereof.

A mixture supply port 68 is formed on an upper side of a midstream region of the airflow passage 66. Further, as depicted in FIG. 1, an air-intake side of a duct collector 92 is connected to the outlet 64 of the airflow passage 66 via a duct 90. The duct collector 92 is equipped with a fan 91 serving as a suction device to suck in air, and configured to generate an airflow FL (see FIG. 2) in the airflow passage 66 of the wind-force sorting mechanism 60 by means of suction force of the fan 91.

As depicted in FIG. 2, the wind-force sorting mechanism 60 is configured to allow the mixture containing projection materials and powdery/granular foreign substances to freely fall from the mixture supply port 68 into the airflow passage 66 (see the arrowed line N) to thereby cause the airflow FL to hit against the mixture so as to sort the mixture into a first group of pieces which move beyond a given reference height position (a given height position of an upper end 82X of an aftermentioned sorting section 82) while being entrained in the airflow FL, and a second group of pieces (usable projection materials) which fall without moving beyond the reference height position. In the following description about the wind-force sorting mechanism 60, a region of the airflow passage 66 located just below and downstream of the mixture supply port 68 and configured to sort the mixture will be referred to as "wind-sorting separation region 70".

A region of the airflow passage 66 located upstream of the mixture supply port 68 is composed of a tube-shaped (in this embodiment, rectangular tube-shaped) wind velocity stabilization section 72. The wind velocity stabilization section 72 is configured such that an area of an airflow passage cross-section taken along a plane orthogonal to a flow direction of the airflow FL is set to be constant, thereby straightening the airflow FL and uniforming a velocity distribution of wind supplied toward a downstream side of the airflow passage 66, in the airflow passage cross-section (taken along the plane orthogonal to the flow direction of the airflow FL). That is, the wind velocity stabilization section 72 is formed as a duct, and designed to regulate a flow of air to send wind with an approximately uniform wind velocity distribution to the wind-sorting separation region 70.

In the wind-force sorting mechanism 60, a first discharge port 74 for discharging projection materials is formed in a region on a downward side of the mixture supply port 68, including an area just below the mixture supply port 68. The first discharge port 74 is provided at a lower end opening of a rectangular tube-shaped portion 80 having an axial direction extending in a vertical direction. A left (in FIG. 1) vertical wall 80A of the rectangular tube-shaped portion 80 is formed such that it is hung down from a downstream edge of a lower wall 72A of the wind velocity stabilization section 72. The airflow passage 66 communicates with the inside of the shot tank 18 (see FIG. 1) through the inside of the rectangular tube-shaped portion 80.

Further, in the wind-force sorting mechanism 60, a second discharge port 76 for discharging casting sand, iron powder and the like is formed in a bottom wall of a downstream region of the airflow passage 66. The airflow passage 66 communicates with a discharge passage 78 depicted in FIG. 1 via the second discharge port 76. The discharge passage 78 is composed of a pipe connection 78A coupled to the airflow passage 66, and a discharge pipe 78B connected to the pipe connection 78A. As one example, a distal end (lower end) of the discharge pipe 78B is disposed above or inside a recovery hopper (depiction is omitted).

As depicted in FIG. 2, the wind-force sorting mechanism 60 comprises a sorting section 82 provided between the first discharge port 74 and the second discharge port 76.
A height position of an upper end 82X of the sorting section 82 is set to a reference height position for governing that the two groups of pieces in the mixture hit by the airflow FL move therebeyond and fall without moving therebeyond, respectively. The reference height position is set according to a reference parameter such as the weight of a projectile to be discharged from the first discharge port 74 (i.e., the weight of a projectile to be reused). More specifically, the reference height position as the setup height position of the upper end 82X of the sorting section 82 is a height equivalent to a height H extending downwardly from the mixture supply port 68 (or a top wall of the airflow passage 66), and determined, for example, by the weight (= size × specific gravity) of the projective. The sorting section 82 comprises a vertical wall 82A which also serves as a right (in FIG. 2) vertical wall of the rectangular tube-shaped portion 80, and an inclined portion 82B extending from an upper end of the vertical wall 82A toward the second discharge port 76. An upper end area of the sorting section 82 including the upper end 82X has a narrowed area 84 formed in the midstream region of the airflow passage 66 at a position downstream of the mixture supply port 68. The narrowed area 84 is formed to narrow a lower region of the airflow passage 66 slightly upwardly to reduce an area of an airflow passage cross-section taken along a plane orthogonal to the flow direction of the airflow FL to become less than that in the wind velocity stabilization section 72. In other words, an upward-downward directional height position of the narrowed area 84 is located slightly above an upward-downward directional height position of the lower wall 72A of the wind velocity stabilization section 72.

The inclined portion 82B is formed in the midstream and lower region of the airflow passage 66 at a position downstream of the mixture supply port 68, and inclined upwardly toward an upstream side of the airflow passage 66. In this state, the narrowed area 84 includes an end of the inclined portion 82B on the upstream side of the airflow passage 66 (an upstream end of the inclined portion 82B). Further, a lower end of the inclined portion 82B is disposed adjacent to a left (in FIG. 2) edge of the second discharge port 76.

In the wind velocity stabilization section 72, a top wall of the downstream region of the airflow passage 66 is formed with an upper inclined portion 86 inclined upwardly toward the downstream side of the airflow passage 66. The upper inclined portion 86 is provided just above the second discharge port 76. A downstreammost, rectangular tube-shape portion 88 of the airflow passage 66 is configured such that the area of the airflow passage cross-section taken along the plane orthogonal to the flow direction of the airflow FL is constant.

The following description will be made about functions/advantageous effects of the separator device and the shot processing apparatus according to the above embodiment.

As depicted in FIG. 1, when the projector 14 projects projection materials to a target object, the projected projection materials are collected by the circulation device 20. More specifically, a mixture containing projection materials and powdery/granular foreign substances (i.e., a mixture containing: reusable projection materials; casting sand; iron powder such as scale and burr; crushed pieces of projection materials; and projection materials worn over an allowable wear volume) is conveyed by the screw conveyer 22 and the bucket elevator 24, and fed to the separator 28 via the chute 26.

As depicted in FIG. 2, in the separator device 28 according to the above embodiment, the magnetic-force sorting mechanism 30 is provided on an upward side of the mixture supply port 68 of the wind-force sorting mechanism 60. In the magnetic-force sorting mechanism 30, the rotary drum 40 is formed in a circular hollow cylindrical shape, and configured to be rotationally driven in one direction about an axis thereof (see the direction indicated by the arrowed line R). Then, through the feeding inclined portion 38A of the guide plate 38, a mixture containing magnetic projection materials and powdery/granular foreign substances is fed to the one lateral zone 40S of the rotary drum 40 to which a portion of the rotary drum 40 currently located in the top position 40T thereof is moved next when the rotary drum 40 is being rotationally driven. In this process, the adjustment gate 36B enables the mixture to be uniformly fed to the rotary drum 40.

The magnet 44 fixedly disposed inside the rotary drum 40 is installed in a region of the rotary drum 40 including a region corresponding to a range extending from the one lateral zone 40S to the lower end position of the rotary drum 40. Thus, the magnetic projection materials are attracted toward the rotary drum 40 by magnetic force of the magnet 44 installed in the above manner. Here, the plurality of reeds 42 are attached to the outer surface of the rotary drum 40, so that, according to rotation of the rotary drum 40, the projection materials attached to the rotary drum 40 by magnetic force of the magnet 44 is forcibly converted (transported) by the reeds 42, and basically fed to the lower right (in FIG. 2) position of the rotary drum 40 in conformity to the installation range of the magnet 44.

In a conventional sorting device, the number of reeds assembled to a rotary drum is one or two in many cases, whereas, in the above embodiment, the number of the reeds 42 is sixteen. Thus, the projection materials magnetically attached to the rotary drum 40 are forcibly conveyed by the reeds 42 sequentially at short intervals, so that it is possible to increase a probability that casting sand falls off from between respective ones of the projection materials. In other words, it is possible to reduce a mix rate of casting sand in the projection material-containing mixture fed to a given position of the rotary drum 40 by the reeds 42 (see the arrowed line G in FIG. 1). Additionally, in the above embodiment, the number of revolutions per unit time of the rotary drum is set to a larger value than ever before, which also contributes to the reduction in the mix rate of casting sand in the projection material-containing mixture fed to a given position of the rotary drum 40.

Further, the guide portion 38B of the guide plate 38 is disposed in opposed and spaced-apart relation to the one lateral zone 40S of the rotary drum 40, so that it is possible to enable the projection materials to be uniformly magnetically attached (adhered) to the rotary drum 40 while preventing scattering of the projection material-containing mixture, and enable non-ferrous casting sand which is not attracted by the magnet 44 to fall along the guide portion 38B, basically by gravity.

Then, in the magnetic-force sorting mechanism 30, a part of the mixture falling from between the guide portion 38B and the rotary drum 40 before reaching the lower end position of the rotary drum 40, i.e., a mixture containing the foreign substances at an increased rate, is discharged to the non-magnetic substance discharge passage 50 via the inclined plate 46 and others (see the arrowed line E, and the arrowed lines F1, F2, F3, F4 in FIG. 1), without being fed to the mixture supply port 68. On the other hand, in the magnetic-force sorting mechanism 30, the remaining mixture attracted by magnetic force of the magnet 44 so as to contain the projection materials at an increased rate is fed to the mixture supply port 68.

Here, the guide portion 38B of the guide plate 39 will be supplementarily described. For example, in a sorting device having a comparative structure in which a guiding plate (see, for example, the inner plate 74 in FIG. 5 disclosed in JP 2014-79809A) is disposed in opposed and spaced-apart relation to a rotary drum over a range from a lateral zone to a lower end position of the rotary drum, a rate at which magnetic projection materials magnetically attached to the rotary drum fall away from the rotary drum when the magnetic projection materials scrap out casting sand supported by the guiding plate is not always low. As a result, in the sorting device having such a structure, a wastage rate of the projection materials becomes relatively high. Differently, in the above embodiment, casting sand basically falls by gravity without being scraped out by the projection materials magnetically attached to the rotary drum 40, so that it is possible to suppress the rate at which the projection materials magnetically attached to the rotary drum 40 fall away from the rotary drum 40.

As described above, the mixture containing foreign substances at a rate reduced by the sorting in the magnetic-force sorting mechanism 30 is supplied to the wind-force sorting mechanism 60. Thus, the load on the wind-force sorting mechanism 60 as the next process can be reduced, and thus the mixture can be efficiently sorted by the wind-force sorting mechanism 60.

Additionally discussing the magnetic-force sorting mechanism 30 from another viewpoint, in a sorting device designed on the assumption that a large amount of casting sand is contained in a mixture to be fed to a magnetic-force sorting mechanism, a structure in which two magnetic sorters are arranged one above the other has been employed to reduce a final mix rate of casting sand in the magnetic-force sorting mechanism. Differently, in the above embodiment, by increasing the number of the reeds 42 and the number of revolutions per unit time of the rotary drum 40, and improving how to feed the mixture to the main unit 30M of the magnetic-force sorting mechanism 30 and the arrangement of the guide portion 38B and others, mixture sorting efficiency can be increased to enable a single main unit 30M of the magnetic-force sorting mechanism 30 to have the same processing ability as the structure in which two main units of a magnetic-force sorting mechanism are arranged one above the other. As a result, it becomes possible to realize reduction in required driving force and downsizing of the entire device.

In the above embodiment, the mixture containing the projection materials at an increased rate is fed onto the inclined walls 48B, 52B forming the receiving section 56 (mainly onto the inclined wall 48B) at a position just below the main unit 30M, and then flows into the discharge section 54 from between each lower end of the gates 58A, 58B and a corresponding one of the inclined walls 48B, 52B. Thus, an amount of the mixture to be fed to the discharge section 54 is regulated by the gates 58A, 58B. In this way, the mixture is fed to the mixture supply port 68 (i.e., the wind-force sorting mechanism 60) via the discharge section 54 uniformly and in a constant amount, so that it is possible to stabilize mixture sorting accuracy in the wind-force sorting mechanism 60.

In the wind-force sorting mechanism 60 of the sorting device according to the above embodiment, the airflow passage 66 extending horizontally from the inlet 62 to the outlet 64 is provided, and the airflow FL flowing from the inlet 62 to the outlet 64 is generated in the airflow passage 66 by means of suction force of the dust collector 92 (see FIG. 1, the suction device) provided on the side of the outlet 64. Further, in the wind-force sorting mechanism 60, the mixture containing projection materials and powdery/granular foreign substances is supplied from the mixture supply port 68 formed on the upper side of the midstream region of the airflow passage 66, such that it feely falls into the airflow passage 66 (see the arrowed line H) to thereby cause the airflow FL to hit against the mixture so as to sort the mixture into a first group of pieces which move beyond the upper end 82X of the sorting section 82 (given reference height position) while being entrained in the airflow FL, and a second group of pieces which fall without moving beyond the upper end 82X of the sorting section 82 (given reference height position). The reusable projection materials are discharged from the first discharge port 74 through the inside of the rectangular tube-shaped portion 80 (see the arrowed line J), to flow toward the shot tank 19 depicted in FIG. 1, and then supplied to the projector 14 (see the arrowed line K). On the other hand, casting sand, iron powder such as scale and burr, crushed projection materials and projection materials worn over an allowable wear volume are discharged as waste substances from the second discharge port 76 (the arrowed lines M1, M2,M3, M4 in FIG. 1) through the inclined portion 82B depicted in FIG. 2 (see the arrowed line L).

Here, the wind velocity stabilization section 72 depicted in FIG. 2, which forms a region of the airflow passage 66 upstream of the mixture supply port 68 is configured to have a tube shape in which the area of the airflow passage cross-section taken along the plane orthogonal to the flow direction of the airflow FL is constant, thereby straightening the airflow FL and uniforming the velocity distribution of wind supplied toward the downstream side of the airflow passage 66, in the airflow passage cross-section. That is, in the wind-force sorting mechanism 60, wind having an approximately uniform velocity distribution flows from the wind velocity stabilization section 72 into the wind-sorting separation region 70, so that the wind can uniformly hit against the projection material-containing mixture to provide improved mixture sorting efficiency (separation efficiency) in the wind-sorting separation region 70.

For supplementing the above, in a comparative structure devoid of the wind velocity stabilization section as in the wind-force sorting mechanism disclosed, for example, in the JP 2014-79809A, wind velocity is less likely to become stable, and it is necessary to increase the volume of airflow so as to stabilize the wind velocity. Differently, in the above embodiment, by providing the wind velocity stabilization section 72, it becomes possible to stabilize the wind velocity in the wind-sorting separation region 70 to generate an approximately uniform airflow FL, thereby improving the mixture sorting efficiency and eliminating a need for strong suction force to stabilize the wind velocity. This becomes possible to reduce the volume of airflow. Further, the capability of reducing the volume of airflow leads to a possibility to downsize the fan 91 of the dust collector 92 (see FIG. 1). Thus, an energy-saving effect can also be expected.

In the above embodiment, the narrowed area 84 is formed in the midstream region of the airflow passage 66 at a position downstream of the mixture supply port 68. The narrowed area 84 is part of the sorting section 82 in the wind-force sorting mechanism 60, and is formed to narrow the lower region of the airflow passage 66 upwardly to reduce the area of the airflow passage cross-section taken along the plane orthogonal to the flow direction of the airflow FL to become less than that in the wind velocity stabilization section 72. This makes it possible to increase the velocity of the airflow FL in the airflow passage 66 to effectively sort the mixture in the airflow passage 66.

In the above embodiment, the inclined portion 82B as part of the sorting section 82 in the wind-force sorting mechanism 60 is formed in the midstream and lower region of the airflow passage 66 at a position downstream of the mixture supply port 68, and inclined upwardly toward the upstream side of the airflow passage 66. The narrowed area 84 includes the upstream end of the inclined portion 82B, so that it is possible to stably increase the velocity of the airflow FL in the airflow passage 66 and enable casting sand as a part of the mixture having moved beyond the narrowed area 84 to flow along the inclined portion 82B (see the arrowed line L).

As described above, the separator device 28 according to the above embodiment can improve the mixture sorting efficiency. Further, the separator device 28 can effectively suppress foreign substances (casting sand, iron powder, etc.) which would otherwise flow in the projector 14 depicted in FIG. 1, and thus suppress unnecessary wear or the like of a consumable component of the projector 14, so that it becomes possible to extend a usable life of the consumable component of the projector 14, and project adequate projection materials in an adequate amount to thereby stabilize finishing quality of a product subjected to shot processing.

Next, modifications of the above embodiment will be described. In the above embodiment, the narrowed area 84 is formed in the airflow passage 66 depicted in FIG. 2. While this structure is preferable, a structure having no narrowed area in the airflow passage may be employed. Further, in the above embodiment, the inclined portion 82B including the narrowed area 84 as part thereof is formed. Alternatively, a structure devoid of the inclined portion 82B may be employed.

In the above embodiment, the discharge section 54, the receiving section 56 and the gates 58A, 58B are formed on the upward side of the mixture supply port 68. Alternatively, a structure devoid of one or both of the gates 58A, 58B may be employed.

In the above embodiment, the separator device 28 is designed to be used in the case where a projectile is a magnetic type, wherein the magnetic-force sorting mechanism 30 is provided on the upward side of the mixture supply port 68. Alternatively, the separator device may be designed to be used in the case where a projectile is a non-magnetic type, wherein only the wind-force sorting mechanism may be provided without providing any magnetic-force sorting mechanism.

As one modification of the above embodiment, for example, the magnet may be installed in a region of the rotary drum 40 corresponding to a range extending from the one lateral zone 40S to the lower end position of the rotary drum 40. That is, the magnet may be installed in one of various regions of the rotary drum 40 including the region corresponding to the range extending from the one lateral zone 40S to the lower end position of the rotary drum 40.

In the above embodiment, the shot processing apparatus 10 is configured as depicted in FIG. 1. Alternatively, the shot processing apparatus of the present invention may be a shot peening apparatus or may be a shot peening apparatus also serving as any other type of shot processing apparatus, for example. Further, in the above embodiment, the projector 14 is composed of a centrifugal projector. Alternatively, the projector may be any other suitable type of projector, such as an air nizzle-type projector configured to inject a compressed air containing projection materials, from a nozzle.

It is to be understood that the above embodiment and the above modifications can be implemented by appropriately combining them together.

Although an advantageous embodiment of the present invention has been shown and described, it should be understood that the present invention is not limited to such an embodiment, but various changes and modifications may be made therein without departing from the spirit and scope thereof as set forth in the appended claims.

### LIST OF REFERENCE SIGNS

10: shot processing apparatus
14: projector
28: separator device
30: magnetic-force sorting mechanism
38A: feeding inclined portion (mixture feeding device)
38B: guide portion
40: rotary drum
40S: one lateral zone
40T: top position
44: magnet
48A: vertical wall
48B: inclined wall
52A: vertical wall
52B: inclined wall
54: discharge section
56: receiving section
58A: gate
58B: gate
60: wind-force sorting mechanism
62: inlet
64: outlet
66: airflow passage
68: mixture supply port
72: wind velocity stabilization section
82: sorting section
82B: inclined portion
84: narrowed area
91: fan (suction device)
92: dust collector

## Claims

1. A separator device for sorting a mixture containing projection materials and powdery/granular foreign substances to separate the projection materials from the mixture, comprising a suction device to suck in air, and a wind-force sorting mechanism for sorting the mixture to separate the projection materials from the mixture, by means of wind force, wherein the wind-force sorting mechanism comprises:
an airflow passage which extends horizontally from an inlet to an outlet thereof and in which an airflow is generated by suction force of the suction device provided on the side of the outlet;
a mixture supply port formed on an upper side of a midstream region of the airflow passage; and
a sorting section configured to allow the mixture containing projection materials and powdery/granular foreign substances to freely fall from the mixture supply port into the airflow passage to thereby cause the airflow to hit against the mixture so as to sort the mixture into a first group of pieces which move beyond a given reference height position while being entrained in the airflow, and a second group of pieces which fall without moving beyond the reference height position;
wherein the airflow passage comprises a wind velocity stabilization section formed upstream of the mixture supply port, and configured to have a tube shape in which an area of an airflow passage cross-section taken along a plane orthogonal to a flow direction of the airflow is constant, thereby straightening the airflow and uniforming a velocity distribution of wind supplied toward a downstream side of the airflow passage, in the airflow passage cross-section.

2. The separator device according to claim 1, wherein the sorting section has a narrowed area formed to narrow a lower region of the airflow passage upwardly to reduce the area of the airflow passage cross-section taken along the plane orthogonal to the flow direction of the airflow to become less than that in the wind velocity stabilization section.

3. The separator device according to claim 2, wherein the sorting section has an inclined portion formed to be inclined upwardly toward an upstream side of the airflow passage, and wherein the narrowed area is composed of an end of the inclined portion on the upstream side of the airflow passage.

4. The separator device according to any one of claims 1 to 3, wherein the separator device further comprises:
a discharge section located on an upward side of the mixture supply port and composed of a pair of vertical walls opposed to each other in spaced-apart relation;
a receiving section composed of a pair of inclined walls extending, respectively, from upper ends of the pair of vertical walls in opposite directions away from each other with an upward inclination, wherein the mixture is fed onto the inclined walls; and
a vertical wall-like gate disposed in spaced-apart relation to upper surfaces of respective one ends of the inclined walls on the side of the vertical walls.

5. The separator device according to any one of claims 1 to 4, wherein the separator device further comprises: a magnetic-force sorting mechanism provided on an upward side of the mixture supply port of the wind-force sorting mechanism and configured to sort the mixture to separate magnetic projection materials from the mixture, by means of magnetic force, the magnetic-force sorting mechanism comprising:
a rotary drum formed in a circular hollow cylindrical shape and configured to be rotationally driven in one direction about an axis thereof;
a mixture feeding device to feed the mixture to one lateral zone of the rotary drum;
a magnet fixedly disposed inside the rotary drum at least in a region corresponding to a range extending from the one lateral zone to a lower end position of the rotary drum; and
a guide portion disposed in opposed and spaced-apart relation to the one lateral zone of the rotary drum,
whereby the magnetic-force sorting mechanism is operable to prevent a part of the mixture falling from between the guide portion and the rotary drum before reaching the lower end position of the rotary drum, from being fed to the mixture supply port, and feed, to the mixture supply port, the remaining mixture attracted by magnetic force of the magnet so as to contain the projection materials at an increased rate.

6. A shot processing apparatus comprising:
a projector for projecting projection materials to a target object to be processed; and
the separator device recited in any one of claims 1 to 5, the separator device being provided in a recovery path for recovering the projection materials projected by the projector.
